# EUROPÄISCHE PATENTSCHRIFT

(11) **EP 4 094 891 B1**
(45) Veröffentlichungstag und Bekanntmachung des Hinweises auf die Patenterteilung: **20.12.2023**
(21) Anmeldenummer: 22173303.3
(22) Anmeldetag: 13.05.2022
(51) Int. Cl.: B24C 1/04, B24C 3/32, B24C 5/02, B24C 7/00, B24C 11/00, B24C 5/00, H01M 10/0585

(54) **VERFAHREN UND SCHNEIDVORRICHTUNG ZUM SCHNEIDEN VON ELEKTRODENFOLIEN**
METHOD AND DEVICE FOR CUTTING ELECTRODE FILMS
PROCÉDÉ ET DISPOSITIF DE COUPE PERMETTANT DE COUPER DES FEUILLES D'ÉLECTRODE

(30) Priorität: 26.05.2021 DE 102021113539
(43) Veröffentlichungstag der Anmeldung: 30.11.2022
(73) Patentinhaber: VOLKSWAGEN AG, 38440 Wolfsburg (DE)
(72) Erfinder: JAMADAR, Kartik, 38442 Wolfsburg (DE); GANGURDE, Priyanka, 422006 Nashik (IN)
(74) Vertreter: karo IP

(56) Entgegenhaltungen:
- DE-A1- 19 630 000
- DE-A1-102017 218 137
- DE-A1-102019 200 419
- JP-A- 2015 146 237
- US-A1- 2012 252 326
- US-B1- 9 090 808
- US-B2- 9 492 908

## Beschreibung

Die Erfindung betrifft ein Verfahren zum Schneiden von Elektrodenfolien, insbesondere von beschichten Elektrodenfolien gemäß dem Oberbegriff des unabhängigen Anspruchs 1. Ein derartiges Verfahren ist aus dem Dokument JP 2015-146237 A bekannt.

Für den Antrieb von Kraftfahrzeugen werden vermehrt Batterien, insbesondere Lithium-Ionen-Batterien eingesetzt. Batterien werden üblicherweise aus Zellen zusammengesetzt, wobei jede Zelle einen Stapel von Anoden-, Kathoden- und Separatorfolien aufweist, die ggf. in Form von Lagen bzw. Materialschichten vorliegen. Zumindest ein Teil der Anoden- und Kathodenfolien sind als elektrische Strom-Ableiter ausgeführt, zur Ableitung des von der Zelle bereitgestellten Stroms hin zu einem außerhalb der Zelle angeordneten Verbraucher. Die einzelnen Elemente eines Stapels werden im Folgenden auch als Elektroden bzw. Folien bezeichnet.

Die einzelnen Folien werden insbesondere als Endlosmaterial bereitgestellt, ggf. beschichtet, z. B. mit einem Aktivmaterial, und zumindest teilweise beschnitten. Unbeschichtete Bereiche von beschichteten Folien können als Ableiter eingesetzt werden.

Beim Schneiden von Elektroden werden folgende Schnitte durchgeführt:
- Schlitzen: Die Schnittlinie verläuft entlang der Erstreckung (x-Richtung) des Endlosmaterials zur Aufteilung des breiten Ausgangsmaterials in mehrere weniger breite Streifen Endlosmaterial;
- Ausklinken: mit der Schnittlinie werden die Ableiter aus dem Endlosmaterial herausgebildet; die Schnittlinien verlaufen längs und quer zur Erstreckung des Endlosmaterials;
- Abtrennen: die Schnittlinie verläuft quer zur Erstreckung des Endlosmaterials; durch das Abtrennen werden die Elektrodenfolien von dem Endlosmaterial abgeschnitten und die einzelnen Lagen des Stapels gebildet.

Der aktuelle Stand der Technik beim Schneiden von Lithium-Ionen-Batterie-Elektroden nutzt das Scherprinzip, bei dem ein oberes Messer (oberhalb einer zu schneidenden Lage) in Kontakt mit einem unteren Messer (unterhalb einer zu schneidenden Lage) kommt. Der Kontakt führt zu einer hohen Reibung und damit zu schnellerem Werkzeugverschleiß. Das Schlitzen mit hohen Geschwindigkeiten vergrößert dieses Problem. Deshalb ist derzeit die Schneidgeschwindigkeit auf maximal 120 m/min [Meter/Minute] begrenzt.

Das Schlitzen wird insbesondere durch obere und untere Kreismesser aus Wolframkarbid ausgeführt. Diese Messer müssen etwa nach 200 km [Kilometer] Schnittlinie nachgeschliffen werden. Ein so häufiges Nachschleifen der Messer verursacht hohe Betriebskosten.

Das Ausklinken und das Abtrennen werden insbesondere als separate Arbeitsgänge nach dem Schlitzen durchgeführt. Dies geschieht entweder mechanisch oder per Laser. Aufgrund der separaten Maschinen für das Schlitzen und Ausklinken ist ein höherer Investitions- und Platzbedarf erforderlich.

Das Laserschneiden ist ein energieintensiver Prozess (~ 6 kW [Kilowatt] Leistungsbedarf der Anlage) und erzeugt eine Wärmeeinflusszone. Das Aktivmaterial der beschichteten Elektrode in der hitzebeeinflussten Zone wird verbrannt, wodurch die Batteriekapazität verringert wird. Der Laserprozess ist zudem ineffizient, weil die meisten der konzentrierten Lichtstrahlen von der Kupfer- bzw. Aluminiumoberfläche der Elektrode reflektiert werden. Man benötigt insbesondere einen speziellen grünen Laser, um eine bessere Lichtadsorption zu erreichen. Dieser Lasertyp ist allerdings teuer und erlaubt keine höheren Geschwindigkeiten als 80 m/min.

Mechanisches Ausklinken hat einen hohen Werkzeugverschleiß. Außerdem muss der Vorschub der Elektroden in regelmäßigen Abständen angehalten werden, um den Prozessschritt auszuführen. Dies führt zu reduzierten Schnittgeschwindigkeiten. Die Bewegung der Elektrode in z-Richtung (Dickenrichtung) während des Schlitzvorgangs verursacht eine Welligkeit an der Schlitzkante bzw. Schnittlinie. Eine Kontrolle dieser Welligkeit ist nicht möglich, da kein Gegenwerkzeug vorhanden ist.

Eine Begrenzung der Elektrodenbewegung in y-Richtung (Breitenrichtung) ist insbesondere nicht vorgesehen. Dies führt zu einer Welligkeit in y-Richtung.

Durch das Fehlen einer Gegenkraft beim Schlitzen und mechanischen Ausklinken kann es zu einer Gratbildung kommen. Dadurch kann insbesondere ein Kurzschluss in der Batteriezelle entstehen. Aktivmaterial der geschnittenen Elektrode kann an den Schneidkanten hängenbleiben. Dies erfordert eine umfangreiche Reinigung der Schneidkante und auch des Messers. Das Anhaften von Partikeln an den Schneidkanten, die größer als 10 µm [Mikrometer] sind, kann ebenfalls einen Kurzschluss in der Batteriezelle verursachen.

Kurz gesagt, das Schneiden mit dem Werkzeug (mechanisches Schneiden) und/oder das Schneiden mit Energie (Laser) kann dazu führen, dass die Schnittgeschwindigkeit beeinträchtigt, die Kosten erhöht, die Batteriekapazität verringert und/oder die Sicherheit der Batteriezelle reduziert ist.

Diese Nachteile könnten wie folgt reduziert werden:
- ausgiebiges Reinigen der Schneide beim Schneiden mit einer Lösung aus Alkohol und Paraffinöl;
- Reinigen der Schneidkante beim mechanischen Schneiden durch berührende und berührungslose Reinigung; bei der berührungslosen Reinigung wird ionisierte Luft auf die Schneidkante geblasen, um die statische Aufladung auf nichtleitenden Partikeln zu neutralisieren; derartig neutralisierte Partikel können dann abgeblasen oder abgesaugt werden;
- Verwendung eines grünen Lasers, weil dieser die geringste Reflexion von der metallischen Oberfläche der Elektrode hat;
- Verringerung der Schnittgeschwindigkeit, so dass der Werkzeugverschleiß reduziert werden kann;
- Aufweichung der Toleranz der Schneidkante (hinsichtlich zulässiger Gratgröße und Partikelanhaftung), wodurch allerdings die Batteriesicherheit tatsächlich verringert wird.

Die Hauptnachteile bekannter, im Einsatz befindlicher Anlagen sind wie folgt:
- ein hoher Verschleiß des Schlitzmessers; es muss alle 200 km nachgeschliffen werden; Wolframkarbid und andere Hartmetalle sowie Keramik als Werkzeugmaterial reduzieren diese Verschleißrate, sind aber sehr teuer;
- eine umfangreiche Reinigungsstation ist beim Schneiden erforderlich; ggf. ist eine Elektrodenreinigungsstation nach dem Schlitzen und Laserschneiden erforderlich, um Partikelverunreinigungen von der Elektrode zu entfernen; dies erhöht die Kosten, die Zykluszeit und/oder den Platzbedarf der Maschine;
- das mechanische Längsteilen (Schlitzen) ist sehr empfindlich gegenüber Schnittparametern wie Schnittwinkel, Schnittgeschwindigkeit, Kraft zwischen Ober- und Untermesser, Rauheit der Messeroberfläche und Maschinenvibration; geringfügige Änderungen führen zu Gratbildung und zusätzlicher Partikelkontamination;
- für das kontinuierliche Ausklinken und Abtrennen gibt es derzeit keine realisierbare Lösung; das bedeutet, dass während des Ausklinkens und Abtrennens die Elektrodenbewegung vorübergehend angehalten wird; dies reduziert die Geschwindigkeit des Ausklinkens und Abtrennens; die maximale Geschwindigkeit beim Ausklinken und Abtrennen beträgt 60 m/min.

Es sind die folgenden Techniken bekannt, um einige der genannten Nachteile zu überwinden:
- Verwendung von hartem Material wie chromreichem Stahl, Keramik und Wolframkarbid als Werkzeugmaterial, um den Verschleiß zu reduzieren;
- der kleinste Radius beim Ausklinken wird auf 2 mm [Millimeter] eingestellt; es ist nicht möglich, einen kleineren Radius zwischen zwei Schneidkanten zu realisieren (am Schnittpunkt von Längs- und Querschnitt);
- eine kontinuierliche Bewegung der Elektrode während des Ausklinkens und des Abtrennens kann nur bei wenigen Fertigungsspezialisten ausgeführt werden; das bedeutet, dass die Laserpistole während des Schneidens in einem Winkel fährt, so dass der endgültige Beschneidungsschnitt "perfekt" gerade ist; dies erfordert eine sehr präzise Steuerung des Verfahrwegs der Laserpistole und der Elektrodenbewegung;
- Verwendung verschiedener Schneidprinzipien wie Rotationsschneiden zum Schlitzen und Ausklinken; beim Rotationsschnitt ist die Qualität des Querschnitts im Vergleich zum Längsschnitt schlechter;
- Verwendung eines grünen Lasers und hoher Leistung (6 kW) zum Schneiden der Anode;
- beim Laserschneiden der Elektrode wird eine Kühlplatte verwendet, um eine schnelle Abkühlung zu erreichen und die Wärmeeinflusszone zu reduzieren.

Im Ergebnis bedeutet das, dass das Schneiden der Batterieelektrode mit mechanischen Werkzeugen oder mit Energie (Laser) immer noch ein fehlerbehafteter, toleranzreicher, kostenintensiver und/oder unzuverlässiger Prozess ist.

Aus der DE 10 2017 218 137 A1 ist ein Verfahren zum Herstellen einer Elektrodenanordnung für eine Batterie bekannt. Dabei werden Elektrodenschichten mit dem Ultraschallschneiden getrennt. Dabei kontaktiert eine Messersonotrode die Elektrodenschicht und führt senkrecht zur Elektrodenschicht gerichtete Bewegungen aus. Durch den Kontakt mit der Messersonotrode wird das Material der Elektrodenschicht getrennt.

Aus der JP 2015-146237 A ist ein Verfahren zum Schneiden von Elektrodenfolien, die für einen Einsatz in einer Batteriezelle vorgesehen sind, zumindest durch einen Partikelstrom und einen Wasserstrom.

Aus der US 2012/252326 A1 und der US 9 492 908 B2 ist jeweils eine Schneidvorrichtung bekannt, bei der ein Partikelstrom als Schneidmittel verwendet wird.

Die DE 10 2019 200 419 A1 offenbart eine Schneidvorrichtung, bei der ein Partikelstrom als Schneidmittel verwendet wird, wobei die Schneidvorrichtung zu Schwingungen angeregt wird, um die Schneidwirkung zu verbessern.

Aufgabe der vorliegenden Erfindung ist es, die mit Bezug auf den Stand der Technik angeführten Probleme zumindest teilweise zu lösen. Insbesondere soll ein Verfahren und eine Schneidvorrichtung zum Schneiden von Elektrodenfolien vorgeschlagen werden, durch die ein qualitativ hochwertiger Schnitt mit hoher Geschwindigkeit und bei möglichst geringem Verschleiß durchgeführt werden kann.

Zur Lösung dieser Aufgaben trägt ein Verfahren mit den Merkmalen des unabhängigen Patentanspruchs 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird ein Verfahren zum Schneiden von Elektrodenfolien vorgeschlagen. Die Elektrodenfolien sind für einen Einsatz in einer Batteriezelle vorgesehen. Das Verfahren wird mit zumindest einer Schneidvorrichtung umfassend zumindest eine Düse mit einem Auslass, einer Partikelzuleitung und eine Gaszuleitung ausgeführt. Das Schneiden erfolgt zumindest durch einen Partikelstrom.

Das Verfahren weist zumindest die folgenden Schritte auf:
a) Bereitstellen einer Elektrodenfolie mit einer Oberfläche;
b) Anordnen des Auslasses über der Elektrodenfolie in einem Abstand zu der Oberfläche;
c) Einleiten eines ersten Gasstroms aus der Gaszuleitung in die Schneidvorrichtung,
d) Einleiten zumindest von Partikeln aus der Partikelzuleitung in die Schneidvorrichtung,
e) Mischen des ersten Gasstroms und zumindest der Partikel in der Schneidvorrichtung zu dem Partikelstrom;
f) Beaufschlagen der Elektrodenfolie mit dem aus dem Auslass austretenden Partikelstrom, so dass die Elektrodenfolie getrennt wird.

Die obige (nicht abschließende) Einteilung der Verfahrensschritte in a) bis f) soll vorrangig nur zur Unterscheidung dienen und keine Reihenfolge und/oder Abhängigkeit erzwingen. Auch die Häufigkeit der Verfahrensschritte kann variieren. Ebenso ist möglich, dass Verfahrensschritte einander zumindest teilweise zeitlich überlagern. Ganz besonders bevorzugt finden die Schritte c) bis f) zumindest zeitweise zeitlich parallel zueinander statt. Schritte c) bis f) erfolgen insbesondere nach den Schritten a) und b).

Eine Batteriezelle umfasst insbesondere ein, ein Volumen umschließendes Gehäuse und in dem Volumen angeordnet mindestens eine erste Elektrodenfolie einer ersten Elektrodenart, eine zweite Elektrodenfolie einer zweiten Elektrodenart und ein dazwischen angeordnetes Separatormaterial sowie einen Elektrolyten, z. B. einen flüssigen oder einen festen Elektrolyten.

Die Batteriezelle ist insbesondere eine Pouchzelle (mit einem verformbaren Gehäuse bestehend aus einer Pouchfolie) oder eine prismatische Zelle (mit einem formfesten Gehäuse). Eine Pouchfolie ist ein bekanntes verformbares Gehäuseteil, dass als Gehäuse für sogenannte Pouchzellen eingesetzt wird. Es handelt sich dabei um ein Kompositmaterial, z. B. umfassend einen Kunststoff und Aluminium.

Die Batteriezelle ist insbesondere eine Lithium-lonen-Batteriezelle.

Die einzelnen Folien der Mehrzahl von Elektrodenfolien sind aufeinander angeordnet und bilden insbesondere einen Stapel. Die Elektrodenfolien sind jeweils unterschiedlichen Elektrodenarten zugeordnet, sind also als eine Anode oder eine Kathode ausgeführt. Dabei sind Anoden und Kathoden wechselweise und jeweils durch das Separatormaterial getrennt voneinander angeordnet.

Eine Batteriezelle ist ein Stromspeicher, der z. B. in einem Kraftfahrzeug zum Speichern von elektrischer Energie eingesetzt wird. Insbesondere weist z. B. ein Kraftfahrzeug eine elektrische Maschine zum Antrieb des Kraftfahrzeuges (einen Traktionsantrieb) auf, wobei die elektrische Maschine durch die in der Batteriezelle gespeicherte elektrische Energie antreibbar ist.

Gemäß Schritt a) erfolgt insbesondere ein Bereitstellen einer Elektrodenfolie mit einer Oberfläche. Die Elektrodenfolie wird insbesondere als Endlosmaterial bereitgestellt. Die Elektrodenfolie umfasst insbesondere ein Trägermaterial, insbesondere aus einem metallischen Material, dass ggf. und dabei zumindest teilweise beschichtet ausgeführt ist, z. B. mit einem Aktivmaterial. Die Elektrodenfolie weist zwei größte Seitenflächen mit einer theoretisch endlosen Länge in einer x-Richtung, eine Breite in einer y-Richtung und eine Dicke in einer z-Richtung auf. Die Erstreckung in z-Richtung ist dabei die geringste. Eine der Seitenflächen der Elektrodenfolie bildet vorliegend die Oberfläche.

Es wird eine Schneidvorrichtung bereitgestellt, zumindest umfassend eine Düse mit einem Auslass. Weiter erfolgt ein Anordnen des Auslasses über der Elektrodenfolie in einem Abstand zu der Oberfläche (Schritt b)). Die Düse dient der Ausrichtung des Partikelstroms auf die Oberfläche. Über den Auslass der Düse tritt der Partikelstrom aus der Schneidvorrichtung aus und strömt hin zur Oberfläche. Die Düse ist in einem derartigen Abstand von der Oberfläche angeordnet, dass kein mechanischer Kontakt zwischen Düse und Oberfläche vorliegt. Dieser Abstand kann auch nicht durch einzelne Partikel überbrückt werden.

Weiter werden eine Partikelzuleitung und eine Gaszuleitung bereitgestellt. Diese Zuleitungen dienen insbesondere dem Transport der Partikel und eines ersten Gasstroms.

Gemäß Schritt c) erfolgt insbesondere ein Einleiten eines ersten Gasstroms aus der Gaszuleitung in die Schneidvorrichtung. Gemäß Schritt d) erfolgt ein Einleiten zumindest von Partikeln aus der Partikelzuleitung in die Schneidvorrichtung. Weiter erfolgt ein Mischen des ersten Gasstroms und zumindest der Partikel in der Schneidvorrichtung zu dem Partikelstrom gemäß Schritt e). Der erste Gasstrom dient insbesondere dem Transport und der Beschleunigung der Partikel, so dass diese zusammen mit dem Gasstrom, also als Partikelstrom, über die Düse hin zur Oberfläche transportiert werden.

Gemäß Schritt f) erfolgt insbesondere ein Beaufschlagen der Elektrodenfolie mit dem aus dem Auslass austretenden Partikelstrom und ein Trennen der Elektrodenfolie. Die Elektrodenfolie wird durch das Auftreffen der Partikel auf der Oberfläche sukzessive durchtrennt. Dabei werden die Partikel insbesondere auf die Oberfläche geschleudert, so dass das Material der Oberfläche bzw. der Elektrodenfolie durch die Partikel verdrängt wird.

Insbesondere ist die Düse eine Sonotrode bzw. als eine Sonotrode ausgebildet, wobei der Auslass durch eine Schwingungseinrichtung zu Schwingungen angeregt wird. Infolge der Schwingungen bewegt sich der Auslass insbesondere in einer zur Oberfläche senkrecht orientierten Ebene. Die Sonotrode ist als Düse hohl ausgeführt.

Eine Sonotrode ist ein Werkzeug, das durch das Einleiten von hochfrequenten mechanischen Schwingungen (z. B. Ultraschall, aber auch geringere Frequenzen) in Resonanzschwingungen versetzt wird. Über die Sonotrode kann eine Amplitude der Anregung vergrößert werden.

Anstelle des Schlitzens und Ausklinkens mit mechanischem Schneiden (unter Verwendung des Scherprinzips durch das Schneidewerkzeug) oder durch Energie (Laser), wird hier das Schneiden durch ein mit hoher Geschwindigkeit vibrierendes Gasmedium, den ersten Gasstrom, das abrasive wirkende Partikel mit sich trägt, durchgeführt. Die Schneidwirkung der Partikel kann durch die hochfrequente Anregung des Partikelstroms über die Sonotrode verstärkt werden.

Mit dem vorgeschlagenen Verfahren ist es insbesondere möglich, hohe Geschwindigkeiten beim Schneiden zu erzielen. Darüber hinaus gibt es keinen Werkzeugverschleiß, da die Düse die Elektrodenfolie nicht kontaktiert, keine Grate an den Trennkanten und keine Wärmeeinflusszone. Das Verfahren ist insbesondere für das Schlitzen geeignet. Es lässt sich jedoch auch für das Ausklinken und Abtrennen einsetzen.

Es sind andere Verfahren bekannt, bei denen ein Schneiden mittels Schwingungsanregung und abrasiv wirkenden Partikeln erfolgt. Diese werden z. B. als Hammerschlagverfahren ("hammering") bezeichnet. Dabei wird ein Abrasivmittel auf dem Schneidbereich (hier der Oberfläche) verteilt wird und von einem vibrierenden Schneidwerkzeug in Schwingung versetzt.

Der Hauptunterschied des vorgeschlagenen Verfahrens ist, dass es gerade keine Hammerwirkung, also keine Wechselwirkung zwischen Düse bzw. Sonotrode und Elektrodenfolie gibt. Das Schneiden erfolgt durch einen Wurfmechanismus (Bombardierung). Der, ggf. vibrierende, erste Gasstrom, insbesondere ein Hochgeschwindigkeits-Luftstrahl, nimmt die abrasiv wirkenden Partikel mit. Die Partikel beginnen insbesondere ebenfalls in dem ersten Gasstrom zu vibrieren. Sowohl der erste Gasstrom als auch die Partikel werden in Form eines scharfen Abrasiv-Gasmessers auf den Schneidbereich der Oberfläche geschleudert. Dabei kann der Brennpunkt des Abrasiv-Gasmessers sehr klein ausgeführt sein.

Das Schneiden erfolgt insbesondere durch die kinetische und ggf. Vibrations-Energie der vom ersten Gasstrom transportierten Partikel.

Insbesondere weist zumindest
- die Schwingung eine Amplitude, insbesondere am Auslass, von höchstens 80 Mikrometer, bevorzugt höchstens 50 Mikrometer; oder
- die Frequenz der Schwingung zwischen 5 kHz und 20 kHz, bevorzugt zwischen 8 kHz und 15 kHz, besonders bevorzugt zwischen 9 und 12 kHz; oder
- der Auslass einen Durchmesser von bis zu 1,0 Millimeter, insbesondere von 0,2 bis 0,8 Millimetern, bevorzugt von 0,4 bis 0,6 Millimetern, auf.

Die Schwingungseinrichtung umfasst bevorzugt einen Wandler (piezoelektrisch oder magnetostriktiv), auf den ein hochfrequentes elektrisches Signal übertragen wird. Der Wandler wandelt das elektrische Signal in niederfrequente mechanische Schwingungen mit geringer Amplitude um. Im Wesentlichen wandelt der Wandler also elektrische Energie in mechanische Schwingungen um. Diese mechanische Schwingung wird dann an die hohle Sonotrode weitergegeben.

Die mechanischen Schwingungen im Bereich des Wandlers haben eine geringe Amplitude. Die Hauptfunktion der Sonotrode ist es, diese Schwingung zu verstärken.

Ein piezoelektrischer Wandler bzw. Kristall erzeugt einen kleinen elektrischen Strom, wenn er zusammengedrückt wird. Auch wenn der elektrische Strom durch den Kristall geleitet wird, dehnt er sich aus. Wenn der Strom entfernt wird, nimmt der Kristall seine ursprüngliche Größe und Form wieder an. Solche Wandler sind bis zu 900 Watt erhältlich. Piezo-Elektrokristalle haben einen hohen Umwandlungswirkungsgrad von 95%. Bei der Verwendung eines derartigen Wandlers wird ein elektrisches Signal in den Wandler eingeleitet und die dadurch erzeugte mechanische Schwingung an die Sonotrode weitergegeben.

Ein magnetostriktiver Schallwandler ändert seine Länge, wenn er einem starken Magnetfeld ausgesetzt wird. Diese Wandler werden aus Nickel oder Nickellegierungsblechen hergestellt. Ihr Umwandlungswirkungsgrad liegt bei etwa 20-30%. Solche Wandler sind bis zu 2000 Watt erhältlich. Die maximale Längenänderung, die erreicht werden kann, liegt bei etwa 25 Mikrometern. Bei der Verwendung eines derartigen Wandlers wird ein Magnetfeld in den Wandler gegeben und die dadurch erzeugte mechanische Schwingung dann der Sonotrode zugeführt.

Wegen der hohen Umwandlungseffizienz ist der piezoelektrische Wandler zu bevorzugen. Für das Schneiden von Elektrodenfolien hat sich eine niedrige Frequenz um 10kHz und eine Amplitude um 50 Mikrometer als besonders geeignet herausgestellt. Die Sonotrode erhält eine Eingangsamplitude von etwa 20 bis 25 Mikrometer, wobei die Ausgangsamplitude am Ausgang dann z. B. auf 50 Mikrometer verstärkt wird.

Der Wandler wird insbesondere in Form eines Rings bereitgestellt und im Bereich des Eintritts des Sonotrode angeordnet. Es wird insbesondere ausschließlich die Sonotrode über den Wandler angeregt.

Die Sonotrode bzw. die Düse ist insbesondere aus Titan ausgeführt, wobei der Kanal durch die Sonotrode bzw. Düse vom Einlass bis hin zum Auslass aus Wolframkarbid ausgeführt ist. Kanal und Sonotrode können zweiteilig ausgeführt und durch Verpressen miteinander verbunden sein.

Der Kanal durch die Düse bzw. Sonotrode verläuft insbesondere kegelförmig oder exponentialförmig. Der Auslass weist insbesondere einen geringeren Durchmesser aus als der Einlass.

Mit der Düse/ Sonotrode kann der Partikelstrom weiter fokussiert werden, so dass er auf der Oberfläche einen größten Durchmesser von ca. 10 % des größten Durchmessers des Auslasses aufweist.

Die Berechnung der erforderlichen Länge einer Sonotrode, also zwischen Einlass und Auslass, ist einer der wichtigsten Teile der Sonotrodenkonstruktion. Um Verluste zu minimieren und die maximale Energie des Schallkopfs bzw. des Wandlers auf die Sonotrode zu übertragen, sollte die Sonotrode in Resonanz mit der Betriebsfrequenz des Schallkopfs stehen. Die Länge der Sonotrode sollte einem ungraden Vielfachen der halben Wellenlänge der Schwingung des Wandlers (lambda /2) entsprechen. Es ist insbesondere zu beachten, dass die Amplitude der Schwingung am Auslass maximal ist.

Der Abstand zwischen der Oberfläche und dem Auslass sollte insbesondere einem Vielfachen der Wellenlänge der Schwingung des Wandlers entsprechen. Damit ist eine Amplitude der Schwingung im Fokuspunkt des Partikelstroms auf der Oberfläche maximal. Insbesondere erhält der Einlass des Kanals der Sonotrode die Amplitude vom Schallwandler.

Insbesondere wird über die Partikelzuleitung eine Mischung aus zumindest den Partikeln sowie einer wasserfreien Flüssigkeit zugeführt. Die Flüssigkeit dient insbesondere der Benetzung der Partikel. Damit sind die Partikel mehr aneinander gebunden und ein Zurückprallen der auf die Oberfläche geschleuderten Partikel kann verringert bzw. verhindert werden.

Bei dem vorgeschlagenen Verfahren wird insbesondere kein Wasser zur Herstellung der Mischung verwendet, im Gegensatz zum bekannten Hammerschlagverfahren.

Insbesondere weist die Flüssigkeit einen Anteil von höchstens 25 Gew.-%, bevorzugt von 4 bis 15 Gew.-%, besonders bevorzugt von mindestens 2 Gew.-%, an der Mischung auf.

Insbesondere umfasst die Flüssigkeit einen Bestandteil eines Karbonat-basierten Elektrolyts, z. B. Ethylenkarbonat (C₃H₄O₃), oder ein Paraffin-basiertes Öl. Wird als Flüssigkeit ein ElektrolytBestandteil verwendet, ist dessen Anhaftung an der Elektrodenfolie nicht schädlich, auch nicht für den späteren Betrieb der so hergestellten Batteriezelle.

Ethylenkarbonat kann insbesondere durch Polypropylenkarbonat ergänzt werden, so dass die Flüssigkeit auch bei geringeren Temperaturen keinen festen Zustand annimmt.

Die Flüssigkeit kann den Partikeln in einer Mischeinrichtung zugeführt werden. Die Flüssigkeit und die Partikel werden insbesondere gemischt und dann, z. B. als sogenannter Slurry, zur Zuführung zur Schneidvorrichtung bereitgestellt. Über die Partikelzuleitung kann die Mischung aus Partikeln und Flüssigkeit dann zugeführt werden.

Insbesondere wird zumindest der erste Gasstrom über eine Venturi-Düse der Düse zugeführt.

Insbesondere umfasst der erste Gasstrom (ausschließlich) Luft. Diese wird insbesondere stromaufwärts der Gaszufuhrleitung verdichtet, insbesondere auf einen Druck von mindestens 2 bar, bevorzugt von mindestens 5 bar; besonderes bevorzugt von höchstens 10 bar.

Für die Verdichtung kann ein Gaskompressor in Form eines Zentrifugalkompressor in radialer Bauweise eingesetzt werden. Dabei wird trockenes Gas (z. B. trockene Luft) in das Zentrum eines rotierenden Laufrads mit radialen Schaufeln gesaugt und durch die Zentrifugalkraft verdichtet. Die Rotationsgeschwindigkeit des Zentrifugalkompressors steuert den Gasdruck.

Der erste Gasstrom wird über die Gaszuleitung der Schneidvorrichtung zugeführt und in den Eintritt der Venturi-Düse (in den konvergierenden ersten Abschnitt) eingeleitet.

Eine Venturi-Düse ist grundsätzlich bekannt. Diese umfasst regelmäßig einen konvergierenden ersten Abschnitt, einen zweiten Abschnitt mit einem geringsten Durchströmungsquerschnitt und einen divergierenden dritten Abschnitt. Die Venturi-Düse weist stromaufwärts des ersten Abschnitts einen Eintritt und stromabwärts des dritten Abschnitts einen Austritt auf. Die Venturi-Düse erstreckt sich zwischen Eintritt und Austritt entlang der Durchströmungsrichtung über eine Gesamtlänge. Die einzelnen Abschnitte erstrecken sich jeweils über eine Länge.

Eine Venturi-Düse besteht insbesondere aus einem glattwandigen Rohrstück mit einer Verengung des Querschnitts, beispielsweise durch zwei gegeneinander gerichtete Konen, die an der Stelle ihres geringsten Durchmessers vereint sind. Wenn ein Fluid durch eine Venturi-Düse fließt, ist an der engsten Stelle des Rohrstücks der dynamische Druck (Staudruck) maximal und der hydrostatische Druck minimal.

Im ersten Abschnitt beschleunigt der erste Gasstrom auf eine hohe Geschwindigkeit (Machzahlen im Bereich von 0,5 bis 1), während es sich im divergierenden Bereich der Düse ausdehnt. Die Geschwindigkeit des ersten Gasstroms am Austritt sollte etwa bei Machzahl 0,5 bis 1 liegen. Der Druck am Austritt entspricht insbesondere dem Umgebungsdruck.

Der (trockene) erste Gasstrom bewegt sich durch die Venturi-Düse hin zum Austritt, wobei der am Eintritt vorliegende Druck am Austritt in eine höhere Geschwindigkeit umgewandelt wird. Dieser beschleunigte erste Gasstrom wird insbesondere dem Einlass der Düse bzw. der Sonotrode zugeführt.

Die Partikelzuleitung mündet insbesondere am Eintritt der Venturi-Düse, stromabwärts des Eintritts in dem ersten Abschnitt oder in dem dritten Abschnitt. Die einzelnen Ströme werden insbesondere über Ventile geregelt. Über die Partikelzuleitung können insbesondere ausschließlich die Partikel, ggf. unterstützt von einem Gasstrom, oder die Mischung, umfassend die Partikel und die Flüssigkeit, zugeführt werden.

Bei einer Einmündung der Partikelzuleitung stromaufwärts des zweiten Abschnitts können zumindest die Partikel auf die gleiche Geschwindigkeit wie der erste Gasstrom beschleunigt werden. Die Venturi-Düse wird aber eine geringere Lebensdauer aufweisen, da die sich schnell bewegenden Partikel abrasiv auf den zweiten Abschnitt einwirken.

Bei einer Einmündung der Partikelzuleitung stromabwärts des zweiten Abschnitts hat der erste Gasstrom im dritten Abschnitt die höchste Geschwindigkeit. Die Geschwindigkeit der Partikel ist wesentlich geringer als bei einer weiter stromaufwärtigeren Einmündung. Die Venturi-Düse hat allerdings eine höhere Lebensdauer.

Insbesondere wird als Partikel Aluminiumoxid verwendet. Aluminiumoxid ist keramisch, nicht elektrisch leitend und ggf. in der Batteriezelle z. B. als Beschichtung des Separators vorhanden. Außerdem hat es eine hohe Härte und einen hohen elektrischen Widerstand.

Insbesondere weisen die Partikel einen größten Durchmesser von höchstens 40 Mikrometer auf. Eine Qualität der durch das Schneiden erzeugten Trennkanten kann durch kleinere Partikel erhöht werden. Bevorzugt weisen die Partikel einen größten Durchmesser von 10 bis 30 Mikrometer auf.

Insbesondere weist die Schneidvorrichtung eine Absaugeinrichtung auf, über die zumindest von der Oberfläche zurück zur Düse zurückprallende Partikel oder durch die Elektrodenfolie hindurch getretene Partikel abgesaugt werden. Die Absaugeinrichtung kann zumindest teilweise benachbart zu der Düse bzw. Sonotrode angeordnet sein. Damit können von der Oberfläche zurückprallende Partikel abgesaugt werden. Alternativ oder zusätzlich kann zumindest ein Teil der Absaugeinrichtung von der Düse/ Sonotrode durch die Elektrodenfolie beabstandet angeordnet sein. Die Absaugeinrichtung kann also zumindest gegenüberliegend zur Düse/ Sonotrode angeordnet sein, wobei die Elektrodenfolie dazwischen angeordnet ist. Die durch die Elektrodenfolie hindurch tretenden Partikel können dann abgesaugt werden.

Insbesondere wird die Elektrodenfolie über Spannrollen und/oder Förderrollen geführt, so dass die Lage der Elektrodenfolie gegenüber der Schneidvorrichtung definiert ist. Die Schnittlinien verlaufen insbesondere so, dass in diesem Bereich keine Abstützung durch eine Rolle vorliegt.

Die Rollen können mit einer Oberflächenstruktur ausgeführt sein, so dass die Elektrodenfolie nicht nur in Längsrichtung (x-Richtung) sondern auch in Richtung der Breite (y-Richtung) gespannt wird.

Insbesondere kann die Elektrodenfolie über eine Abstützvorrichtung abgestützt werden, so dass insbesondere ein Abstand zwischen dem Auslass der Düse/ Sonotrode und der Oberfläche genau eingestellt werden kann. Insbesondere kann die Absaugeinrichtung zumindest teilweise in der Abstützvorrichtung integriert ausgeführt sein, so dass unterhalb der Schnittlinie und insbesondere zu jedem Zeitpunkt während des Trennens, die Absaugeinrichtung gegenüber von dem Auslass angeordnet ist.

Insbesondere umfasst die Schneidvorrichtung eine Heizeinrichtung, durch die die von dem Partikelstrom beaufschlagte Elektrodenfolie getrocknet wird. Insbesondere umfasst die Heizeinrichtung zumindest einen Infrarotstrahler, durch den die Elektrodenfolie erwärmt werden kann, insbesondere auf 105 bis 125 Grad Celsius, bevorzugt auf ca. 120 Grad Celsius.

Mit der Heizeinrichtung kann insbesondere die Flüssigkeit der Mischung von den Trennkanten entfernt werden.

Insbesondere weist die Schneidvorrichtung eine Reinigungsvorrichtung auf, in der zumindest eine Trennkante der Elektrodenfolie zumindest durch einen mechanischen Kontakt, z. B. durch eine Bürste oder eine Rolle, oder durch einen ionisierten zweiten Gasstrom von anhaftenden Partikeln gereinigt wird. Die ggf. statisch aufgeladenen Partikel können durch den ionisierten zweiten Gasstrom neutralisiert und dann einfacher abgesaugt oder abgeblasen werden.

Die Partikel können insbesondere wiederholt genutzt werden. Dazu können die Partikel gesammelt und zurückgeführt werden, so dass sie erneut über die Partikelzuleitung dem Verfahren zugeführt werden können.

Es wird weiter eine Schneidvorrichtung zum Schneiden von Elektrodenfolien, die für einen Einsatz in einer Batteriezelle vorgesehen sind, vorgeschlagen. Die Schneidvorrichtung ist insbesondere zur Durchführung des beschriebenen Verfahrens geeignet ausgeführt. Die Schneidvorrichtung umfasst zumindest eine Düse mit einem Auslass, eine Partikelzuleitung zur Zuleitung zumindest von Partikeln und eine Gaszuleitung zur Zuleitung eines ersten Gasstroms. Die Partikel und der erste Gasstrom sind in der Schneidvorrichtung zu einem Partikelstrom mischbar und über die Düse dem Auslass zuführbar. Die Düse ist über der Elektrodenfolie in einem Abstand zu einer Oberfläche der Elektrodenfolie anordenbar und die Elektrodenfolie zumindest durch den Partikelstrom trennbar.

Insbesondere ist die Düse eine Sonotrode, wobei der Auslass durch eine Schwingungseinrichtung der Schneidvorrichtung zu Schwingungen anregbar ist. Infolge der Schwingungen wird der Auslass insbesondere in einer zur Oberfläche senkrecht orientierten Ebene bewegt.

Es wird weiter eine Batteriezelle vorgeschlagen, zumindest umfassend ein Gehäuse und darin angeordnet einen Stapel von Elektrodenfolien, die insbesondere durch das beschriebene Verfahren und/ oder durch die beschriebene Schneidvorrichtung hergestellt sind.

Es wird weiter ein Kraftfahrzeug vorgeschlagen, zumindest umfassend einen Traktionsantrieb und eine Batterie mit mindestens einer der beschriebenen Batteriezellen, wobei der Traktionsantrieb durch die mindestens eine Batteriezelle mit Energie versorgbar ist.

Das Verfahren ist insbesondere durch ein Steuergerät, das zur Durchführung des beschriebenen Verfahrens ausgestattet, konfiguriert oder programmiert ist, durchführbar. Mit dem Steuergerät kann zumindest
- eine Regelung des mindestens einen ersten Gasstroms;
- eine Regelung des mindestens einen Partikelstroms;
- eine Regelung der Schnittgeschwindigkeit;
- eine Regelung der Geschwindigkeit des Partikelstroms;
- eine Regelung der Schwingungseinrichtung
erfolgen.

Die Schneidvorrichtung umfasst insbesondere das vorstehend beschriebe Steuergerät.

Weiter kann das Verfahren auch von einem Computer bzw. mit einem Prozessor einer Steuereinheit ausgeführt werden.

Es wird demnach auch ein System zur Datenverarbeitung vorgeschlagen, das einen Prozessor umfasst, der so angepasst/konfiguriert ist, dass er das Verfahren bzw. einen Teil der Schritte des vorgeschlagenen Verfahrens durchführt.

Es kann ein computerlesbares Speichermedium vorgesehen sein, das Befehle umfasst, die bei der Ausführung durch einen Computer/Prozessor diesen veranlassen, das Verfahren bzw. mindestens einen Teil der Schritte des vorgeschlagenen Verfahrens auszuführen.

Die Ausführungen zu dem Verfahren sind insbesondere auf die Schneidvorrichtung, die Batteriezelle, das Kraftfahrzeug, das Steuergerät sowie auf das computerimplementierte Verfahren (also den Computer bzw. den Prozessor, das System zur Datenverarbeitung, das computerlesbare Speichermedium) übertragbar und umgekehrt.

Es werden folgende Vorteile realisiert:
- das vorgeschlagene Trennen einer Elektrodenfolie mit Partikeln ermöglicht insbesondere ein gratfreies Schneiden;
- es erzeugt keine Wärmeeinflusszone wie beim Laserschneiden;
- ein Elektrolytbestandteil, z. B. Ethylencarbonat (EC), kann als Flüssigkeit für die Mischung verwendet werden; das heißt, selbst wenn nach dem Trocknen Ethylenkarbonat an der Trennkante vorhanden ist, ist es nicht schädlich;
- insbesondere wird Aluminiumoxid für Partikel vorgeschlagen; es ist kein elektrischer Leiter und erzeugt daher keinen Kurzschluss, wenn Partikel auf der Trennkante verbleiben;
- anstelle von Ethylencarbonat, ggf. mit Additiven, Dimethylencarbonat, ggf. mit Additiven, oder ein Paraffin-basiertes Öl verwendet werden; Paraffinöl kann zur schnellen Verdampfung mit Alkohol gemischt werden; mit der Heizvorrichtung kann das gesamte Paraffin-basierte Öl verdampft werden;
- Sonotrode und Venturi-Düse können integriert ausgeführt werden; diese Baugruppe erzeugt eine hohe Geschwindigkeit und Vibration der Partikel; es kann als eine sehr kompakte Baugruppe bereitgestellt werden; die Venturi-Düse kann am Einlass der Düse/ Sonotrode platziert werden; es ist möglich, Venturi-Düse und Sonotrode als einzelne Baugruppe aus Wolframkarbid herzustellen; ggf. kann die Venturi-Düse mit einer Schraube und einer schwingungsdämpfenden Membran am Eintritt der Sonotrode befestigt werden; dies ermöglicht eine gute Flexibilität bei der Befestigung von Venturi-Düse und Sonotrode; die Venturi-Düse wird dabei nicht von der Sonotrode angeregt;
- kein Partikel kann an der Trennkante haften bleiben, da der Gasstrom mit hoher Geschwindigkeit die Kantenreinigung durchführt; vor dem Aufwickeln kann eine weitere Reinigung der Trennkanten und der Oberfläche durchgeführt werden;
- das Verfahren kann mit einer sehr hohen Schnittgeschwindigkeit von ca. 150 m/min betrieben werden;
- es tritt kein Werkzeugverschleiß auf; aus diesem Grund ist das Verfahren, der Prozess sehr wirtschaftlich;
- es wird kein Gas wie beim Laserschneiden erzeugt; daher ist auch keine aufwendige Gasabsaugung erforderlich; es ist auch keine Kühlung der Elektrodenfolie notwendig, um die Wärmeeinflusszone zu reduzieren;
- das Verfahren kann sowohl zum Schlitzen als auch zum Ausklinken und Abtrennen verwendet werden;
- es wird eine sehr dünne Trennkante erzeugt, da feine Partikel mit einem größten Durchmesser von ca. 12 Mikrometer verwendet werden können und die Amplitude der Schwingung des Auslasses auf ca. 50 Mikrometer eingestellt werden kann;
- durch Reduzierung der Geschwindigkeit und Vibration können verschiedene Elektrodenfolienmaterialien mit derselben Schneidvorrichtung getrennt werden;
- es wird weniger Stellfläche benötigt, da Trennen, Trocknen und Reinigen in einer einzigen Maschine, der Schneidvorrichtung integriert werden können;
- das Verfahren ist wirtschaftlich, da die Partikel mehrfach wiederverwendet werden können;
- der erforderliche Druck für den ersten Gasstrom kann 6 bar betragen, der in der Industrie allgemein verfügbar ist; es liegt daher kein Bedarf zur Bereitstellung trockener Hochdruckluft vor;
- es ist ein berührungsloses Schneiden bzw. Trennen; es ist kein Schneidwerkzeug an der Sonotrode angebracht;
- die Sonotrode hat zwei Hauptfunktionen: sie verstärkt die Amplitude der Vibration und verkleinert den Durchmesser des auf der Oberfläche auftreffenden Partikelstroms; auf diese Weise kann ein scharfer und kleiner Brennpunkt bereitgestellt werden und die Sonotrode gibt eine große Amplitude an die Partikel ab, so dass die Schneidwirkung der Partikel verstärkt wird;
- die Sonotrode ist einfach herzustellen; ein innerer Kanal der Sonotrode, der in Kontakt mit den Partikeln in Berührung kommt, kann aus Wolframkarbid gefertigt werden; dies ermöglicht der Sonotrode eine gute Verschleißfestigkeit und eine hohe Lebensdauer.

Zusammengefasst ist die vorgeschlagene Schneidvorrichtung mit einem sehr scharfen Brennpunkt um 50 Mikrometer, mit einer hohen Geschwindigkeit der Partikel (Mach 0,5-1), mit einer Frequenz um 10 kHz und einer Amplitude um 50 Mikrometer besser geeignet für das Schneiden von Elektrodenfolien für Lithium -lonen-Batterien als andere bisher bekannte Verfahren.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine Schneidvorrichtung zum Durchführen des Verfahrens;
- Fig. 2:: eine Venturi-Düse für die Schneidvorrichtung nach Fig. 1 gemäß einer ersten Ausführungsvariante;
- Fig. 3:: eine Venturi-Düse für die Schneidvorrichtung nach Fig. 1 gemäß einer zweiten Ausführungsvariante;
- Fig. 4:: eine Mischeinrichtung zum Mischen von Partikeln und einer Flüssigkeit;
- Fig. 5:: eine Venturi-Düse und Sonotrode für die Schneidvorrichtung nach Fig. 1;
- Fig. 6:: eine Venturi-Düse und Sonotrode für die Schneidvorrichtung nach Fig. 1 mit einer Absaugeinrichtung;
- Fig. 7:: die Schneidvorrichtung nach Fig. 1 in einer Ansicht von oben;
- Fig. 8:: eine Schneidvorrichtung mit einer Heizeinrichtung in einer Seitenansicht; und
- Fig. 9:: eine Schneidvorrichtung mit einer Heizeinrichtung und einer Reinigungsvorrichtung in einer Seitenansicht.

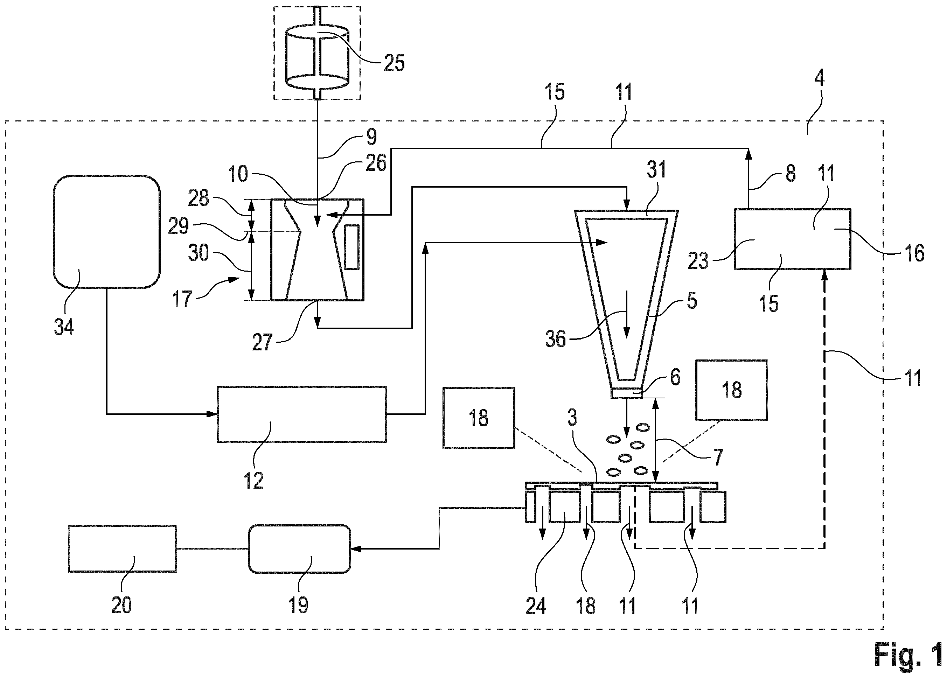

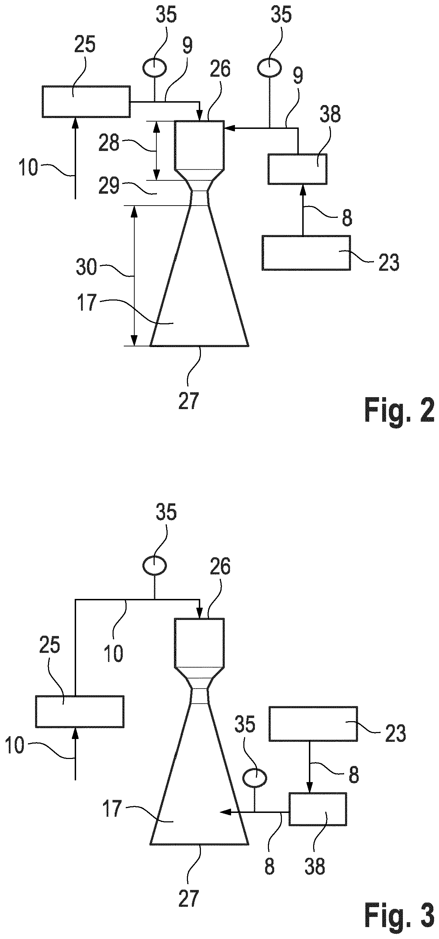

Die Fig. 1 zeigt eine Schneidvorrichtung 4 zum Durchführen des Verfahrens. Fig. 2 zeigt eine Venturi-Düse 17 für die Schneidvorrichtung 4 nach Fig. 1 gemäß einer ersten Ausführungsvariante. Die Fig. 1 und 2 werden im Folgenden gemeinsam beschrieben.

Die Schneidvorrichtung 4 umfasst eine Düse 5 mit einem Auslass 6, eine Partikelzuleitung 8 zur Zuleitung zumindest von Partikeln 11 und eine Gaszuleitung 9 zur Zuleitung eines ersten Gasstroms 10. Die Partikel 11 und der erste Gasstrom 10 werden in der Schneidvorrichtung 4 zu einem Partikelstrom 2 gemischt und über die Düse 5 dem Auslass 6 zugeführt. Die Düse 5 ist über der Elektrodenfolie 1 in einem Abstand 7 zu einer Oberfläche 3 der Elektrodenfolie 1 angeordnet und die Elektrodenfolie 1 wird durch den Partikelstrom 2 getrennt.

Gemäß Schritt a) erfolgt ein Bereitstellen einer Elektrodenfolie 1 mit einer Oberfläche 3. Die Elektrodenfolie 1 wird als Endlosmaterial bereitgestellt. Die Elektrodenfolie 1 weist zwei größte Seitenflächen mit einer theoretisch endlosen Länge in einer x-Richtung, eine Breite in einer y-Richtung und eine Dicke in einer z-Richtung auf. Die Erstreckung in z-Richtung ist dabei die geringste. Eine der Seitenflächen der Elektrodenfolie 1 bildet vorliegend die Oberfläche 3.

Weiter erfolgt ein Bereitstellen einer Schneidvorrichtung 4, umfassend eine Düse 5 mit einem Auslass 6, und ein Anordnen des Auslasses 6 über der Elektrodenfolie 1 in einem Abstand 7 zu der Oberfläche 3 (Schritt b)). Die Düse 5 dient der Ausrichtung des Partikelstroms 2 auf die Oberfläche 3. Über den Auslass 6 der Düse 5 tritt der Partikelstrom 2 aus der Schneidvorrichtung 4 aus und strömt hin zur Oberfläche 3. Die Düse 5 ist in einem derartigen Abstand 7 von der Oberfläche 3 angeordnet, dass kein mechanischer Kontakt zwischen Düse 5 und Oberfläche 3 vorliegt
Zudem erfolgt ein Bereitstellen einer Partikelzuleitung 8 und einer Gaszuleitung 9. Diese Zuleitungen 8, 9 dienen dem Transport der Partikel 11 und eines ersten Gasstroms 10.

Weiter erfolgt ein Einleiten eines ersten Gasstroms 10 aus der Gaszuleitung 9 in die Schneidvorrichtung 4 (Schritt c)) und ein Einleiten zumindest von Partikeln 11 aus der Partikelzuleitung 8 in die Schneidvorrichtung 4 (Schritt d)) sowie ein Mischen des ersten Gasstroms 10 und zumindest der Partikel 11 in der Schneidvorrichtung 4 zu dem Partikelstrom 2 (Schritt e)). Der erste Gasstrom 10 dient dem Transport und der Beschleunigung der Partikel 11, so dass diese zusammen mit dem ersten Gasstrom 10, also als Partikelstrom 2, über die Düse 5 hin zur Oberfläche 3 transportiert werden.

Gemäß Schritt f) erfolgt ein Beaufschlagen der Elektrodenfolie 1 mit dem aus dem Auslass 6 austretenden Partikelstrom 2 und ein Trennen der Elektrodenfolie 1.

Die Düse 5 ist eine Sonotrode bzw. als eine Sonotrode ausgebildet, wobei der Auslass 6 durch eine Schwingungseinrichtung 12 zu angeregt wird. Der Auslass 6 wird infolge der Schwingungen in einer zur Oberfläche 3 senkrecht orientierten Ebene bewegt. Die Sonotrode ist als Düse 5 hohl ausgeführt.

Über die Partikelzuleitung 8 wird ausgehend von einer Mischeinrichtung 23 über eine Pumpe 38 eine Mischung 15 aus den Partikeln 11 sowie einer wasserfreien Flüssigkeit 16 zugeführt.

Der erste Gasstrom 10 wird über eine Venturi-Düse 17 der Düse 5 zugeführt. Dazu wird der erste Gasstrom 10 stromaufwärts der Gaszuleitung 9 verdichtet. Für die Verdichtung wird ein Verdichter 25, z. B. ein Gaskompressor in Form eines Zentrifugalkompressor in radialer Bauweise eingesetzt. Der erste Gasstrom 10 wird über die Gaszuleitung 9 der Schneidvorrichtung 4 zugeführt und in den Eintritt 26 der Venturi-Düse 17 in den konvergierenden ersten Abschnitt 28 eingeleitet.

Eine Venturi-Düse 17 umfasst einen konvergierenden ersten Abschnitt 28, einen zweiten Abschnitt 29 mit einem geringsten Durchströmungsquerschnitt und einen divergierenden dritten Abschnitt 30. Die Venturi-Düse 17 weist stromaufwärts des ersten Abschnitts 28 einen Eintritt 26 und stromabwärts des dritten Abschnitts 30 einen Austritt 27 auf. Die Venturi-Düse 17 erstreckt sich zwischen Eintritt 26 und Austritt 27 entlang der Durchströmungsrichtung über eine Gesamtlänge.

Der (trockene) erste Gasstrom 10 bewegt sich durch die Venturi-Düse 17 hin zum Austritt 27, wobei der am Eintritt 26 vorliegende Druck am Austritt 27 in eine höhere Geschwindigkeit umgewandelt wird. Dieser beschleunigte erste Gasstrom 10 wird dem Einlass 31 der Düse 5 bzw. der Sonotrode zugeführt.

Die Partikelzuleitung 8 mündet stromabwärts des Eintritts 26 in dem ersten Abschnitt 28. Bei einer Einmündung der Partikelzuleitung 8 stromaufwärts des zweiten Abschnitts 29 können die Partikel 11 auf die gleiche Geschwindigkeit wie der erste Gasstrom 10 beschleunigt werden.

Die einzelnen Ströme, also der erste Gasstrom 10 und der Strom der Mischung 15 werden über Ventile 35 geregelt.

Die Schneidvorrichtung 4 weist eine Absaugeinrichtung 18 auf, über die von der Oberfläche 3 zurück zur Düse 5 zurückprallende Partikel 11 und durch die Elektrodenfolie 1 hindurch getretene Partikel 11 abgesaugt werden. Die Absaugeinrichtung 18 ist teilweise benachbart zu der Düse 5 bzw. Sonotrode angeordnet. Damit können von der Oberfläche 3 zurückprallende Partikel 11 abgesaugt werden. Zusätzlich ist ein Teil der Absaugeinrichtung 18 von der Düse 5 durch die Elektrodenfolie 1 beabstandet angeordnet. Die Absaugeinrichtung 18 ist also auch gegenüberliegend zur Düse 5 angeordnet, wobei die Elektrodenfolie 1 dazwischen angeordnet ist. Die durch die Elektrodenfolie 1 hindurch tretenden Partikel 11 können dann abgesaugt werden.

Die Elektrodenfolie 1 wird über Spannrollen 32 und Förderrollen 32 geführt, so dass die Lage der Elektrodenfolie 1 gegenüber der Schneidvorrichtung 4 definiert ist. Die Schnittlinien verlaufen so, dass in diesem Bereich keine Abstützung durch eine Rolle 32 vorliegt.

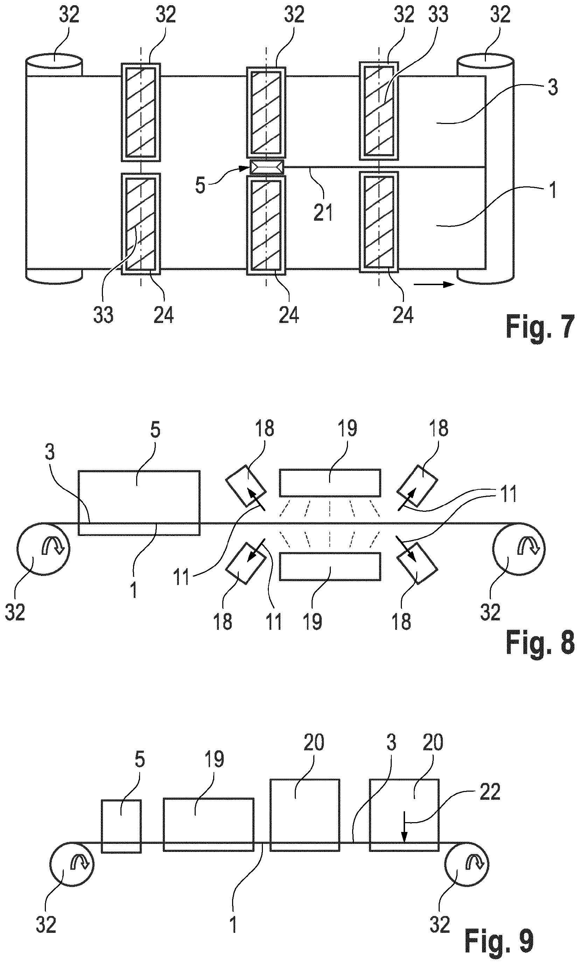

Die Rollen 32 können mit einer Oberflächenstruktur 33 (siehe Fig. 7) ausgeführt sein, so dass die Elektrodenfolie 1 nicht nur in Längsrichtung (x-Richtung) sondern auch in Richtung der Breite (y-Richtung) gespannt wird.

Die Elektrodenfolie 1 wird über eine Abstützvorrichtung 24 abgestützt, so dass ein Abstand 7 zwischen dem Auslass 6 der Düse 5 und der Oberfläche 3 genau eingestellt werden kann. Die Absaugeinrichtung 18 ist zumindest teilweise in der Abstützvorrichtung 24 integriert ausgeführt, so dass unterhalb der Schnittlinie und zu jedem Zeitpunkt während des Trennens, die Absaugeinrichtung 18 gegenüber von dem Auslass 6 angeordnet ist.

Die Schneidvorrichtung 4 umfasst eine Heizeinrichtung 19, durch die die von dem Partikelstrom 2 beaufschlagte Elektrodenfolie 1 getrocknet wird. Mit der Heizeinrichtung 19 kann die Flüssigkeit 16 der Mischung 15 von den Trennkanten 21 (siehe Fig. 7) entfernt werden.

Die Schneidvorrichtung 4 weist eine Reinigungsvorrichtung 20 auf, in der die Trennkanten 21 der Elektrodenfolie 1 durch einen mechanischen Kontakt, z. B. durch eine Bürste oder eine Rolle, oder durch einen ionisierten zweiten Gasstrom 22 von anhaftenden Partikeln 11 gereinigt wird. Die ggf. statisch aufgeladenen Partikel 11 können durch den ionisierten zweiten Gasstrom 22 neutralisiert und dann einfacher abgesaugt oder abgeblasen werden.

Die Partikel 11 werden wiederholt genutzt. Dazu werden die Partikel 11 zumindest über die Absaugeinrichtung 18 gesammelt und zu einer Mischeinrichtung 23 für die Mischung 15 zurückgeführt, so dass sie erneut über die Partikelzuleitung 8 der Venturi-Düse 17 zugeführt werden können.

Über ein Steuergerät 34 könnten bestimmte Teile der Schneidvorrichtung 4 gesteuert werden.

Fig. 3 zeigt eine Venturi-Düse 17 für die Schneidvorrichtung nach Fig. 1 gemäß einer zweiten Ausführungsvariante Auf die Ausführungen zu Fig. 1 und 2 wird verwiesen.

Im Unterschied zur ersten Ausführungsvariante der Venturi-Düse 17 mündet die Partikelzuleitung 8 in dem dritten Abschnitt 30. Bei einer Einmündung der Partikelzuleitung 8 stromabwärts des zweiten Abschnitts 29 hat der erste Gasstrom 10 im dritten Abschnitt 30 die höchste Geschwindigkeit. Die Geschwindigkeit der Partikel 11 ist wesentlich geringer als bei einer weiter stromaufwärtigeren Einmündung. Die Venturi-Düse 17 hat allerdings eine höhere Lebensdauer.

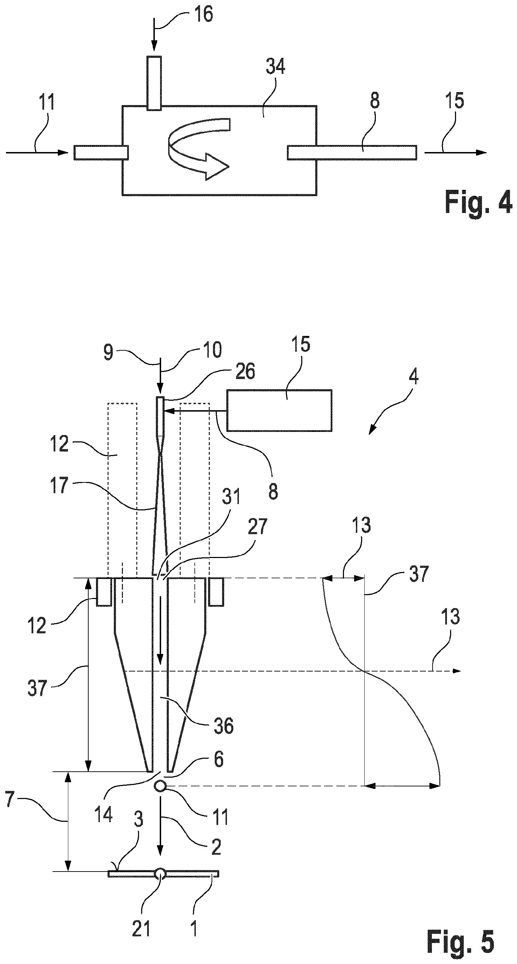

Fig. 4 zeigt eine Mischeinrichtung 23 zum Mischen von Partikeln 11 und einer Flüssigkeit 16. In der Mischeinrichtung 23 werden die Partikel 11 und die Flüssigkeit 16 separat voneinander zugeführt, gemischt und als Mischung 15 der Partikelzuleitung 8 zugeführt.

Fig. 5 zeigt eine Venturi-Düse 17 und Sonotrode für die Schneidvorrichtung nach Fig. 1. Auf die Ausführungen zu Fig. 1 und 2 wird Bezug genommen.

Gemäß Schritt d) erfolgt ein Einleiten eines ersten Gasstroms 10 aus der Gaszuleitung 9 in die Schneidvorrichtung 4 und ein Einleiten zumindest von Partikeln 11 aus der Partikelzuleitung 8 in die Schneidvorrichtung 4 sowie ein Mischen des ersten Gasstroms 10 und zumindest der Partikel 11 in der Schneidvorrichtung 4 zu dem Partikelstrom 2. Gemäß Schritt e) erfolgt ein Beaufschlagen der Elektrodenfolie 1 mit dem aus dem Auslass 6 austretenden Partikelstrom 2 und ein Trennen der Elektrodenfolie 1.

Die Düse 5 ist eine Sonotrode bzw. als eine Sonotrode ausgebildet, wobei der Auslass 6 durch eine Schwingungseinrichtung 12 zu Schwingungen angeregt wird. Die Sonotrode ist als Düse 5 hohl ausgeführt.

Die Schwingungseinrichtung 12 umfasst einen Wandler (piezoelektrisch oder magnetostriktiv), auf den ein hochfrequentes elektrisches Signal übertragen wird. Der Wandler wandelt das elektrische Signal in niederfrequente mechanische Schwingungen mit geringer Amplitude 13 um. Im Wesentlichen wandelt der Wandler also elektrische Energie in mechanische Schwingungen um. Diese mechanische Schwingung wird dann an die hohle Sonotrode weitergegeben.

Die mechanischen Schwingungen im Bereich des Wandlers haben eine geringe Amplitude 13 (siehe Darstellung im Diagramm auf der rechten Seite). Die Hauptfunktion der Sonotrode ist es, diese Schwingung zu verstärken.

Der (Schall-)Wandler wird in Form eines Rings bereitgestellt und im Bereich des Eintritts 26 der Sonotrode angeordnet. Es sind zwei unterschiedliche Anordnungen dargestellt. Der eine Wandler der Schwingungseinrichtung 12 erstreckt sich ringförmig um den Einlass 31 der Düse 5. Der andere, gestrichelt dargestellte Wandler der Schwingungseinrichtung 12 erstreckt sich ringförmig um die Venturi-Düse 17 und ist mit der Düse 5 verbunden. Es wird ausschließlich die Sonotrode über den Wandler angeregt. Der Einlass 31 der Düse 5 bzw. des Kanals 36 der Sonotrode erhält damit die Amplitude vom Schallwandler der Schwingungseinrichtung 12.

Der Kanal 36 durch die Düse 5 bzw. Sonotrode verläuft insbesondere kegelförmig. Der Auslass 6 weist einen geringeren Durchmesser 14 aus als der Einlass 31.

Mit der Düse 5 bzw. Sonotrode kann der Partikelstrom 2 weiter fokussiert werden, so dass er auf der Oberfläche 3 einen größten Durchmesser von ca. 10 % des größten Durchmessers des Auslasses 6 aufweist.

Die Berechnung der erforderlichen Länge 37 einer Sonotrode, also zwischen Einlass 31 und Auslass 6, ist einer der wichtigsten Teile der Sonotrodenkonstruktion. Um Verluste zu minimieren und die maximale Energie des Schallkopfs bzw. des Wandlers auf die Sonotrode zu übertragen, sollte die Sonotrode in Resonanz mit der Betriebsfrequenz des Schallkopfs der Schwingungseinrichtung 12 stehen. Die Länge 37 der Sonotrode sollte einem ungraden Vielfachen der halben Wellenlänge der Schwingung des Wandlers (lambda /2) entsprechen. Die Länge 37 wird so eingestellt, dass die Amplitude 13 der Schwingung am Auslass 6 maximal ist (siehe Darstellung im Diagramm auf der rechten Seite).

Der Abstand 7 zwischen der Oberfläche 3 und dem Auslass 6 sollte insbesondere einem Vielfachen der Wellenlänge der Schwingung des Wandlers entsprechen. Damit ist eine Amplitude der Schwingung im Fokuspunkt des Partikelstroms 2 auf der Oberfläche 3 maximal.

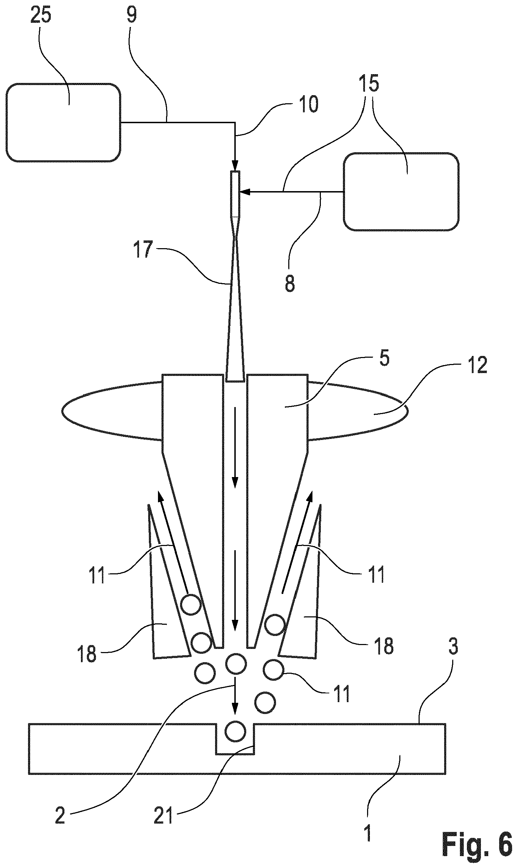

Fig. 6 zeigt eine Venturi-Düse 17 und Sonotrode für die Schneidvorrichtung 4 nach Fig. 1 mit einer Absaugeinrichtung 18. Auf die Ausführungen zu den Fig. 1 bis 5 wird verwiesen.

Die Schneidvorrichtung 4 weist eine Absaugeinrichtung 18 auf, über die von der Oberfläche 3 zurück zur Düse 5 zurückprallende Partikel 11 abgesaugt werden. Die Absaugeinrichtung 18 ist benachbart zu der Düse 5 bzw. Sonotrode angeordnet.

Fig. 7 zeigt die Schneidvorrichtung 4 nach Fig. 1 in einer Ansicht von oben. Auf die Ausführungen zu den Fig. 1 bis 6 wird verwiesen.

Die Elektrodenfolie 1 wird über Spannrollen 32 und Förderrollen 32 geführt, so dass die Lage der Elektrodenfolie 1 gegenüber der Schneidvorrichtung 4 definiert ist. Die Schnittlinien verlaufen so, dass in dem Bereich gegenüber der Düse 5 keine Abstützung durch eine Rolle 32 vorliegt.

Die Förderrollen 32 sind mit einer Oberflächenstruktur 33 ausgeführt, so dass die Elektrodenfolie 1 nicht nur in Längsrichtung (x-Richtung) sondern auch in Richtung der Breite (y-Richtung) gespannt wird. Die Trennkante 21 ist hier durch Schlitzen, also entlang der x-Richtung, erzeugt.

Fig. 8 zeigt eine Schneidvorrichtung 4 mit einer Heizeinrichtung 19 in einer Seitenansicht. Auf die Ausführungen zu den Fig. 1 bis 7 wird verwiesen.

Die Elektrodenfolie 1 ist durch Spannrollen 32 gespannt. Benachbart zu der Heizeinrichtung 19 sind Absaugeinrichtungen 18 angeordnet, durch die die getrockneten Partikel 11 abgesaugt werden können.

Fig. 9 zeigt eine Schneidvorrichtung 4 mit einer Heizeinrichtung 19 und einer Reinigungsvorrichtung 20 in einer Seitenansicht. Auf die Ausführungen zu den Fig. 1 bis 8 wird verwiesen.

In der Reinigungsvorrichtung 20 wird eine Trennkante 21 der Elektrodenfolie 1 durch einen mechanischen Kontakt (linker Teil der Reinigungsvorrichtung 20), z. B. durch eine Bürste oder eine Rolle, und durch einen ionisierten zweiten Gasstrom 22 (rechter Teil der Reinigungsvorrichtung 20) von anhaftenden Partikeln 11 gereinigt. Die ggf. statisch aufgeladenen Partikel 11 können durch den ionisierten zweiten Gasstrom 22 neutralisiert und dann einfacher abgesaugt oder abgeblasen werden.

Die Partikel 11 können wiederholt genutzt werden. Dazu können die Partikel 11 gesammelt und zurückgeführt werden, so dass sie erneut über die Partikelzuleitung 8 dem Verfahren zugeführt werden können.

### Bezugszeichenliste

- 1: Elektrodenfolie
- 2: Partikelstrom
- 3: Oberfläche
- 4: Schneidvorrichtung
- 5: Düse
- 6: Auslass
- 7: Abstand
- 8: Partikelzuleitung
- 9: Gaszuleitung
- 10: erster Gasstrom
- 11: Partikel
- 12: Schwingungseinrichtung
- 13: Amplitude
- 14: Durchmesser
- 15: Mischung
- 16: Flüssigkeit
- 17: Venturi-Düse
- 18: Absaugeinrichtung
- 19: Heizeinrichtung
- 20: Reinigungsvorrichtung
- 21: Trennkante
- 22: zweiter Gasstrom
- 23: Mischeinrichtung
- 24: Abstützvorrichtung
- 25: Verdichter
- 26: Eintritt
- 27: Austritt
- 28: erster Abschnitt
- 29: zweiter Abschnitt
- 30: dritter Abschnitt
- 31: Einlass
- 32: Rollen
- 33: Oberflächenstruktur
- 34: Steuergerät
- 35: Ventil
- 36: Kanal
- 37: Länge
- 38: Pumpe

## Patentansprüche

1. Verfahren zum Schneiden von Elektrodenfolien (1), die für einen Einsatz in einer Batteriezelle vorgesehen sind, zumindest durch einen Partikelstrom (2);
**dadurch gekennzeichnet, dass** das Verfahren mit zumindest einer Schneidvorrichtung (4) umfassend zumindest eine Düse (5) mit einem Auslass (6), einer Partikelzuleitung (8) und eine Gaszuleitung (9) ausgeführt wird und zumindest die folgenden Schritte aufweist:
a) Bereitstellen einer Elektrodenfolie (1) mit einer Oberfläche (3);
b) Anordnen des Auslasses (6) über der Elektrodenfolie (1) in einem Abstand (7) zu der Oberfläche (3);
c) Einleiten eines ersten Gasstroms (10) aus der Gaszuleitung (9) in die Schneidvorrichtung (4)
d) Einleiten zumindest von Partikeln (11) aus der Partikelzuleitung (8) in die Schneidvorrichtung (4)
e) Mischen des ersten Gasstroms (10) und zumindest der Partikel (11) in der Schneidvorrichtung (4) zu dem Partikelstrom (2);
f) Beaufschlagen der Elektrodenfolie (1) mit dem aus dem Auslass (6) austretenden Partikelstrom (2), so dass die Elektrodenfolie (1) getrennt wird.

2. Verfahren nach Patentanspruch 1, wobei die Düse (5) eine Sonotrode ist, wobei der Auslass (6) durch eine Schwingungseinrichtung (12) zu Schwingungen angeregt wird.

3. Verfahren nach Patentanspruch 2, wobei zumindest die Schwingung eine Amplitude (13) von höchstens 80 Mikrometer oder die Frequenz der Schwingung zwischen 5 kHz und 20 kHz oder der Auslass (6) einen Durchmesser (14) von bis zu 1,0 Millimeter aufweist.

4. Verfahren nach einem der vorhergehenden Patentansprüche, wobei über die Partikelzuleitung (8) eine Mischung (15) aus zumindest den Partikeln (11) sowie einer wasserfreien Flüssigkeit (16) zugeführt wird.

5. Verfahren nach Patentanspruch 4, wobei die Flüssigkeit (16) einen Anteil von höchstens 25 Gew.-% an der Mischung (15) aufweist.

6. Verfahren nach einem der vorhergehenden Patentansprüche 4 und 5, wobei die Flüssigkeit (16) einen Bestandteil eines Karbonat-basierten Elektrolyten oder ein Paraffin-basiertes Öl umfasst.

7. Verfahren nach einem der vorhergehenden Patentansprüche, wobei zumindest der erste Gasstrom (10) über eine Venturi-Düse (17) der Düse (5) zugeführt wird.

8. Verfahren nach einem der vorhergehenden Patentansprüche, wobei als Partikel (11) Aluminiumoxid eingesetzt wird.

9. Verfahren nach einem der vorhergehenden Patentansprüche, wobei die Partikel (11) einen größten Durchmesser von höchstens 40 Mikrometer aufweisen.

10. Verfahren nach einem der vorhergehenden Patentansprüche, wobei die Schneidvorrichtung (4) eine Absaugeinrichtung (18) aufweist, über die zumindest von der Oberfläche (3) zurück zur Düse (5) zurückprallende Partikel (11) oder durch die Elektrodenfolie (1) hindurch getretene Partikel (11) abgesaugt werden.

11. Verfahren nach einem der vorhergehenden Patentansprüche, wobei die Schneidvorrichtung (4) eine Heizeinrichtung (19) umfasst, durch die die von dem Partikelstrom (2) beaufschlagte Elektrodenfolie (1) getrocknet wird.

12. Verfahren nach einem der vorhergehenden Patentansprüche, wobei die Schneidvorrichtung (4) eine Reinigungsvorrichtung (20) aufweist, in der zumindest eine Trennkante (21) der Elektrodenfolie (1) zumindest durch einen mechanischen Kontakt oder durch einen ionisierten zweiten Gasstrom (22) von anhaftenden Partikeln (11) gereinigt wird.

## Claims

1. Method of cutting electrode foils (1) intended for use in a battery cell, at least by a particle stream (2); **characterized in that** the method is being carried out with at least one cutting device (4) comprising at least one nozzle (5) having an outlet (6), a particle feed line (8) and a gas feed line (9) and comprises at least the following steps:
a) providing an electrode foil (1) with a surface (3);
b) placing the outlet (6) above the electrode foil (1) at a distance (7) from the surface (3);
c) introducing a first gas stream (10) from the gas feed line (9) into the cutting device (4);
d) introducing at least particles (11) from the particle feed line (8) into the cutting device (4);
e) mixing the first gas stream (10) and at least the particles (11) in the cutting device (4) to form the particle stream (2);
f) subjecting the electrode foil (1) to the particle stream (2) emerging from the outlet (6) so that the electrode foil (1) is separated.

2. Method according to claim 1, wherein the nozzle (5) is a sonotrode, wherein the outlet (6) is excited to vibrate by a vibrating device (12).

3. Method according to claim 2, wherein at least the oscillation has an amplitude (13) of at most 80 micrometers or the frequency of the oscillation is between 5 kHz and 20 kHz or the outlet (6) has a diameter (14) of up to 1.0 millimetre.

4. Method according to one of the preceding claims, wherein a mixture (15) of at least the particles (11) and an anhydrous liquid (16) is supplied via the particle feed line (8).

5. Method according to claim 4, wherein the liquid (16) has a proportion of at most 25% by weight of the mixture (15).

6. Method according to any one of the preceding claims 4 and 5, wherein the liquid (16) comprises a component of a carbonate-based electrolyte or a paraffin-based oil.

7. Method according to any one of the preceding claims, wherein at least the first gas stream (10) is supplied to the nozzle (5) via a venturi (17).

8. Method according to any one of the preceding claims, wherein aluminium oxide is used as the particle (11).

9. Method according to any one of the preceding claims, wherein the particles (11) have a largest diameter of at most 40 micrometres.

10. Method according to one of the preceding claims, wherein the cutting device (4) has an suction device (18) via which particles (11) rebounding at least from the surface (3) back to the nozzle (5) or particles (11) which have passed through the electrode foil (1) are sucked up.

11. Method according to one of the preceding claims, wherein the cutting device (4) comprises a heating device (19) by which the electrode foil (1) acted upon by the particle stream (2) is dried.

12. Method according to one of the preceding claims, wherein the cutting device (4) has a cleaning device (20) in which at least one separating edge (21) of the electrode foil (1) is cleaned of adhering particles (11) at least by a mechanical contact or by an ionised second gas stream (22).

## Revendications

1. Procédé de découpe de films d'électrode (1), qui sont prévus pour être utilisés dans une cellule de batterie, à l'aide d'au moins un flux de particules (2) ; **caractérisé en ce que** le procédé est mis en oeuvre à l'aide d'au moins un dispositif de coupe (4) comprenant au moins une buse (5) pourvue d'une sortie (6), une conduite d'alimentation en particules (8) et une conduite d'alimentation en gaz (9) et comporte au moins les étapes suivantes :
a) fournir un film d'électrode (1) pourvu d'une surface (3) ;
b) disposer la sortie (6) au-dessus du film d'électrode (1) à une distance (7) de la surface (3) ;
c) introduire un premier flux de gaz (10) depuis la conduite d'alimentation en gaz (9) jusque dans le dispositif de coupe (4) ;
d) introduire au moins des particules (11) depuis la conduite d'alimentation en particules (8) jusque dans le dispositif de coupe (4) ;
e) mélanger le premier flux de gaz (10) et au moins les particules (11) dans le dispositif de coupe (4) afin de former le flux de particules (2) ;
f) appliquer le flux de particules (2), qui sort de la sortie (6), au film d'électrode (1) de façon à séparer le film d'électrode (1).

2. Procédé selon la revendication 1, la buse (5) étant une sonotrode, la sortie (6) étant excitée par un dispositif d'oscillation (12) afin de former des oscillations.

3. Procédé selon la revendication 2, au moins l'oscillation ayant une amplitude (13) d'au plus 80 micromètres ou la fréquence de l'oscillation étant comprise entre 5 kHz et 20 kHz ou la sortie (6) ayant un diamètre (14) pouvant atteindre 1,0 millimètres.

4. Procédé selon l'une des revendications précédentes, un mélange (15) d'au moins les particules (11) et d'un liquide anhydre (16) étant fourni par le biais de la conduite d'alimentation en particules (8).

5. Procédé selon la revendication 4, le liquide (16) comportant une proportion de 25 % en poids maximum du mélange (15).

6. Procédé selon l'une des revendications précédentes 4 et 5, le liquide (16) comprenant un constituant d'un électrolyte à base de carbonate ou d'une huile à base de paraffine.

7. Procédé selon l'une des revendications précédentes, au moins le premier flux de gaz (10) étant amené à la buse (5) par le biais d'une buse Venturi (17).

8. Procédé selon l'une des revendications précédentes, de l'oxyde d'aluminium étant utilisé comme particule (11).

9. Procédé selon l'une des revendications précédentes, les particules (11) ayant un plus grand diamètre de 40 micromètres maximum.

10. Procédé selon l'une des revendications précédentes, le dispositif de coupe (4) comportant un module d'aspiration (18) permettant d'aspirer les particules (11) qui rebondissent au moins de la surface (3) vers la buse (5) ou les particules (11) qui ont traversé le film d'électrode (1).

11. Procédé selon l'une des revendications précédentes, le dispositif de coupe (4) comprenant un module de chauffage (19) permettant de sécher le film d'électrode (1) soumis au flux de particules (2).

12. Procédé selon l'une des revendications précédentes, le dispositif de coupe (4) comportant un dispositif de nettoyage (20) dans lequel au moins un bord de séparation (21) du film d'électrode (1) est nettoyé des particules adhérentes (11) au moins par contact mécanique ou par un deuxième flux de gaz ionisé (22).
